**Europäisches Patentamt**

**European Patent Office**

**Office européen des brevets**

(11) Veröffentlichungsnummer : **0 490 808 A1**

# (12) EUROPÄISCHE PATENTANMELDUNG

(21) Anmeldenummer : **91810872.1**

(22) Anmeldetag : **13.11.91**

(51) Int. Cl.$^5$ : **H01M 8/02, H01M 8/24**

(30) Priorität : **11.12.90 CH 3916/90**

(43) Veröffentlichungstag der Anmeldung :
**17.06.92 Patentblatt 92/25**

(84) Benannte Vertragsstaaten :
**CH DE GB IT LI NL SE**

(71) Anmelder : **GEBRÜDER SULZER
AKTIENGESELLSCHAFT
Zürcherstrasse 12
CH-8400 Winterthur (CH)**

(72) Erfinder : **Diethelm, Roland
Im Rossacher 2
CH-8494 Bauma (CH)**
Erfinder : **Barp, Bruno
Grossbuch 11
CH-8964 Rudolfstetten (CH)**
Erfinder : **Brun, Joseph, Dr.
Buchrütiweg 31
CH-8400 Winterthur (CH)**

(54) **Modul zu einer Brennstoffzellenbatterie.**

(57)  Der Modul zu einer Brennstoffzellenbatterie weist eine elektrochemisch aktive Platte (1) auf, die einerseits aus einem schichtförmigen oxidionenleitenden Feststoffelektrolyten (1b) und andererseits aus zwei beidseitig auf der Elektrolytschicht aufgebrachten Elektrodenschichten (1a, 1c) besteht. Erfindungsgemäss ist mindestens eine der Elektrodenschichten (1c) über eine Vielzahl regelmässig angeordneter Kontaktelemente (4) mit einer Stütz- und Elektronenleitstruktur (5 ; 30) elektrisch leitend und unlösbar verbunden. Dank dieser stützenden Struktur erhält die elektrochemisch aktive Platte, die an sich sehr zerbrechlich ist, eine Verstärkung, welche die Gefahr des Zerbrechens bei der Montage des Moduls beträchtlich reduziert.

Fig.2

EP 0 490 808 A1

Fig.3

Die Erfindung bezieht sich auf einen Modul einer Brennstoffzellenbatterie gemäss Oberbegriff von Anspruch 1 sowie Brennstoffzellenbatterien mit solchen Modulen.

Bei Feststoffelektrolyt-Brennstoffzellen reagiert das Brennstoffgas, das sich vorwiegend aus Wasserstoff und/oder Kohlenmonoxid und/oder Methan zusammensetzt, an der negativen Elektrode (Anode) mit Sauerstoffionen, wobei sich Wasser und/oder Kohlendioxid bildet und Elektronen freigesetzt werden. Der Sauerstoff stammt aus Luft, deren Sauerstoffmoleküle an der positiven Elektrode (Kathode) dissoziiert und unter Elektronenaufnahme ionisiert werden. Die Sauerstoffionen diffundieren durch den Feststoffelektrolyten, der als dünne, gasdichte Schicht zwischen den beiden porösen, schichtförmigen Elektroden liegt, und der bei höhern Temperaturen (über rund 1100 K) oxidionenleitend ist. Es sind verschiedene Typen von Feststoffelektrolyt-Brennstoffzellen bekannt (siehe z.B. Brian Riley "Solid Oxide Fuel Cells - the Next Stage" in Journal of Power Sources, 29 (1990) 223 -237).

Aus der EP-PS 0.055.011 ist eine Vorrichtung mit einer Vielzahl von rohrförmigen Brennstoffzellen bekannt. Eine derartige Brennstoffzelle besteht aus einem porösen, luftdurchlässigen Trägerrohr, auf dessen äussern Oberfläche Anode, Feststoffelektrolyt und Kathode als dünne, übereinanderliegende Schichten aufgebracht sind. Die Brennstoffzelle ist an einem Ende geschlossen. Zu diesem Ende führt innerhalb des Trägerrohres ein Einspeiserohr für die Luft. Dieses Einspeiserohr dient auch als Wärmetauscher: Die ausserhalb der Vorrichtung in einem Rekuperator schon vorerhitzte Luft nimmt beim Transport durch das Einspeiserohr Wärme auf, die bei den elektrochemischen Reaktionen freigesetzt wird. Eine Vorrichtung mit derartigen Brennstoffzellen hat den Vorteil, dass keine Dichtungen zwischen den Lufträmen und den Gasrämen nötig sind. Hingegen besteht der Nachteil, dass die Herstellung derartiger Brennstoffzellen aufwendig und daher teuer ist.

Bei einem andern Typ von Brennstoffzelle mit Feststoffelektrolyten ist das elektrochemisch aktive Element eben und quadratisch. Es wird durch eine dünnschichtige Platte gebildet, auf deren beiden Seiten die Elektrodenschichten aufgebracht sind und bei der die Luft nicht durch eine poröse Tragstruktur diffundieren muss. Solche Brennstoffzellen lassen sich weit kostengünstiger als die rohrförmigen herstellen. Jedoch treten hier gravierende Probleme auf, nämlich mit der Abdichtung zwischen den Gas- und den Lufträumen sowie mit Wärmespannungen.

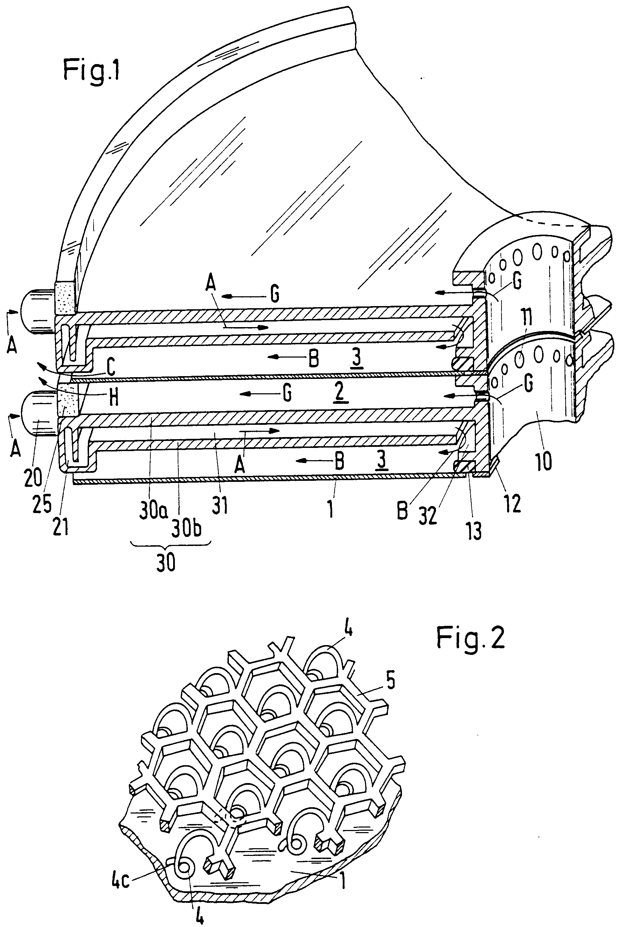

Diese Probleme sind weniger gravierend bei einer Brennstoffzellenbatterie mit ebenen, zentralsymmetrischen Zellen, bei der mit einfachen Mitteln die Luft- von den Gasräumen abgedichtet werden können und bei der Zwangskräfte infolge unterschiedlicher Wärmeausdehnungen klein sind. (Einzelne Details zu diesen Zellen werden weiter unten anhand der Fig.1 beschrieben.) Diese zentralsymmetrische Brennstoffzellenbatterie weist einen modularen Aufbau auf: Einspeiseelemente für Gas und Luft bilden zusammen mit den elektrochemisch aktiven Platten wechselweise angeordnet einen Stapel, wobei diese zwei Komponenten zusammen im wesentlichen jeweils einen Modul bilden.

Das Gas- und Luft-Einspeiseelement weist einen plattenförmigen Hohlkörper auf, der analog zum Einspeiserohr bei der erwähnten rohrförmigen Brennstoffzelle für die eingespiesene Luft als Wärmetauscher dient. Pro Zelle oder Stufe ist nur eine ringförmige Dichtung im Zentrum der Zelle nötig. Die elektrochemisch aktive Platte ist als separierbare Komponente im Modul integriert.

Beim Betrieb der Brennstoffzellenbatterie bestehen in radialer Richtung Temperaturgradienten, die zu Wärmespannungen führen können. Durch die rotationssymmetrische Konstruktion mit der besondern Integration der elektrochemisch aktiven Platten ist eine Wärmedehnung möglich, die nicht stark behindert wird und daher nur geringe Wärmespannungen erzeugt.

Die Elektronenleitung entlang der Oberflächen der Elektrodenschichten ist mit grossen elektrischen Widerständen verbunden. Um die Ohmschen Verluste gering halten zu können, müssen über die gesamten Elektrodenoberflächen verteilt Kontaktstellen angebracht sein, über die der Elektronentransport erfolgen kann.

Da die elektrochemisch aktive Platte sehr dünn und zerbrechlich ist und da sie als separierbare Komponente in den Modul integriert wird, besteht beim Zusammenbau des Moduls wie auch bei der Montage der Brennstoffzellenbatterie aus den Modulen die Gefahr, dass die elektrochemisch aktiven Platten beschädigt werden. Es ist Aufgabe der Erfindung, Mittel zu finden, durch welche diese Verletzlichkeit der elektrochemisch aktiven Platten vermindert wird. Die Lösung dieser Aufgabe wird erfindungsgemäss durch die Merkmale des kennzeichnenden Teils von Anspruch 1 herbeigeführt.

Nachfolgend wird die Erfindung anhand von Ausführungsbeispielen im Zusammenhang mit der Zeichnung näher erläutert. Es zeigen:

Fig.1 Ausschnitt aus einer zentralsymmetrischen Brennstoffzellenbatterie,

Fig.2 Stütz- und Elektronenleitstruktur eines erfindungsgemässen Moduls (erstes Ausführungsbeispiel),

Fig.3 Schnitt durch einen erfindungsgemässen Modul (zweites Ausführungsbeispiel),

Fig.4 Frischluftzufuhr zum Modul,

Fig.5 Detail zur Stütz- und Elektronenleitstruktur des zweiten Ausführungsbeispiels,

Fig.6 Elektronenleitstruktur aus Metallvliess,

Fig.7 dosenartiger Modul und

Fig.8 Stütz- und Elektronenleitstruktur aus elektrisch leitender Keramik.

In Fig.1 ist ein sektorförmiger, zwei Zellen umfassender Ausschnitt aus einer zentralsymmetrischen Brennstoffzellen-batterie mit elektrochemisch aktiven Platten 1 dargestellt. Das Brennstoffgas, im folgenden kurz Gas genannt, wird durch ein zentrales Rohr 10 über eine Vielzahl von Löchern 11 in den Anodenraum 2 eingespiesen (Pfeile G). Das zentrale Rohr 10 setzt sich aus Segmenten zusammen, zwischen denen elektrisch isolierende Ringe 12 eingelegt sind. Ein Dichtungsring 13 sorgt im zentralen Bereich für eine gasundurchlässige Trennung zwischen benachbarten Zellen. Die in einem externen Rekuperator vorerhitzte Frischluft (Pfeile A) gelangt über den Stutzen 20 in einen Ringkanal 21, wo sie über den Umfang der Brennstoffzelle verteilt wird und dabei gleichzeitig durch Wärme, die aus dem Wärmetauscherkörper 30 radial zugeleitet wird, zusätzlich erhitzt wird. Nach der weiteren Erhitzung im Hohlraum 31 zwischen den Platten 30a und 30b tritt die Luft zentral durch die ringförmige Lücke 32 in den Kathodenraum 3 ein (Pfeile B). Am äussern Umfang des Zellenstapels verlassen die verbrauchte Luft (Pfeil C) und das verbrauchte Gas (Pfeil H) die Brennstoffzellen. Das Gas strömt dabei durch eine poröse Ringwand 25. In einem Ringraum zwischen einer nicht dargestellten Gehäusewand und der Oberfläche des Zellenstapels kann die Nachverbrennung der Luft (C) und des Gases (H) unmittelbar nach deren Austritt aus den Brennstoffzellen erfolgen. Das Gas und die Luft können auch separat gesammelt werden und erst dann extern nachverbrannt werden.

In Fig.2 ist eine elekrochemisch aktive Platte 1 dargestellt, die durch eine Elektronenleitstruktur mechanisch verstärkt ist. Die Kontaktelemente 4 sind Drahtverbindungen zur gitterartig ausgebildeten Elektronenleitstruktur 5. Die Kontaktelemente 4 sind regelmässig über die eine Elektrodenschicht der elekrochemisch aktiven Platte angeordnet. Die Kontaktstellen 4c bilden im dargestellten Ausführungsbeispiel ein hexagonales Punktegitter. Die Kontaktelemente 4 sind auf der Elektrodenschicht unlösbar, beispielsweise durch Löten, befestigt. Die Kontaktelemente 4 können flexibel sein, sodass sie auf Grössenänderungen der elekrochemisch aktiven Platte durch Wärmedehnung in nachgiebiger Weise reagieren können. Allerdings müssen die Kontaktelemente 4 steif genug sein, sodass eine die elekrochemisch aktive Platte stützende Funktion gewährleistet ist.

Die andere Seite der elekrochemisch aktiven Platte kann mit einer gleichartigen Stütz- und Elektronenleitstruktur 5 versehen sein. Benachbarte Module einer Brennstoffzellenbatterie können - um eine Serieschaltung zu erhalten - elektrisch verbunden werden, indem die Elektronenleitstrukturen 5 über elektrische Leiter zusammengeschlossen werden. Diese Verbindung benachbarter Module erfolgt mit Vorteil über eine aus zwei Teilen bestehenden Leitung, wobei diese Leitung durch den Gaszuführungskanal 10 der Brennstoffzellenbatterie geführt wird, wo eine unter einem Anpressdruck stehende Kontaktstelle vorgesehen ist. In der reduzierenden Gasumgebung ist gewährleistet, dass die elektrische Verbindung dieser Kontaktstelle nicht durch Oxidation beeinträchtigt wird.

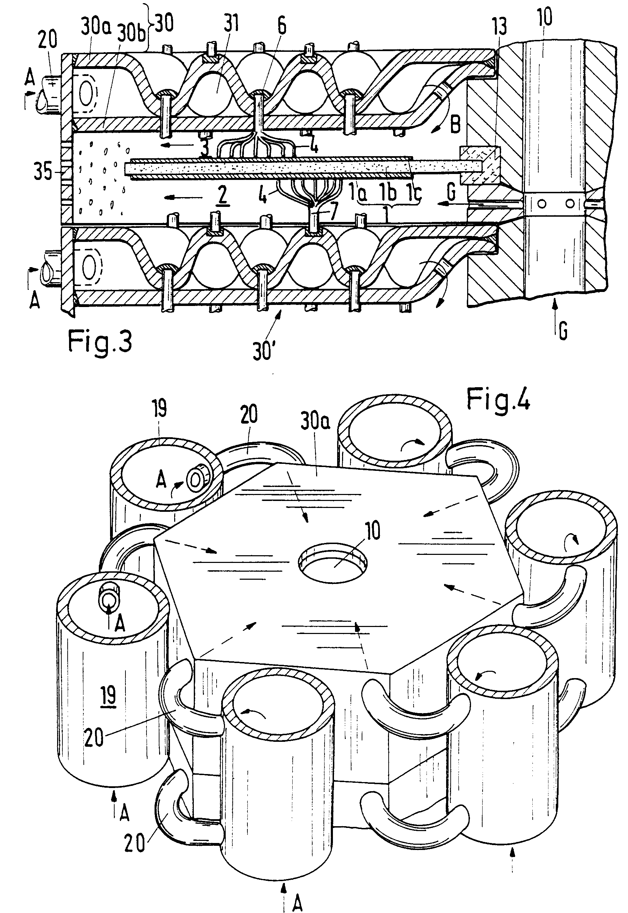

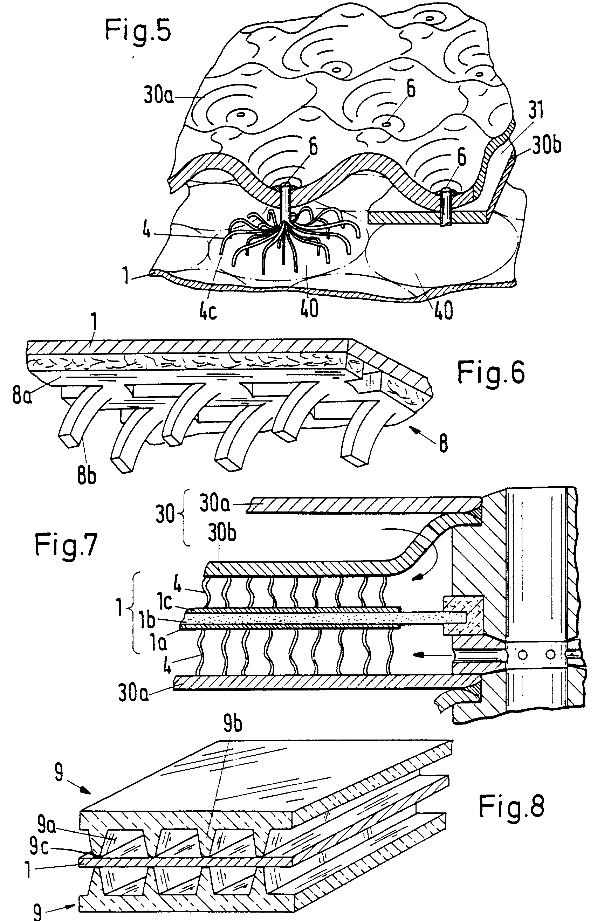

Mit den Figuren 3 bis 5 wird ein zweites Ausführungsbeispiel des erfindungsgemässen Moduls illustriert. Der Längsschnitt in Fig.3 zeigt einen Modul mit dem Wärmetauscherkörper 30′ des benachbarten Moduls. In Fig.4 sieht man, wie zwei Module an die Zuführleitungen 19 für die Frischluft (Pfeile A) über die Verbindungsleitungen 20 angeschlossen sind. Das Schrägbild in Fig.5 stellt Details der Stütz- und Elektronenleitstruktur des zweiten Ausführungsbeispiels dar. Die Wärmetauscherkörper 30, 30′ bestehen aus einem bei hoher Temperatur beständigen Metall, beispielsweise aus einer Nickelbasislegierung, wie sie bei Gasturbinenschaufeln verwendet wird.

Um den Wärmeübergang auf die im Hohlraum 31 strömende Luft zu verbessern, ist die obere Platte 30a des Wärmetauscherkörpers 30 mit hexagonal angeordneten Erhebungen und Vertiefungen versehen. (In Fig.4 ist diese Platte 30a der Einfachheit halber eben dargestellt.) Bei den Vertiefungen sind die beiden Platten 30a und 30b miteinander verbunden: An jeder dieser Stellen ist in einer durch beide Platten gehenden Bohrung ein Bündel 6 von gruppenweise zusammengefassten, S-förmigen Drahtstücken eingelötet. Im vorliegenden zweiten Ausführungsbeispiel wird die Stütz- und Elektronenleitstruktur durch den Wärmetauscherkörper 30 und die Bündel 6 mit den drahtförmigen Kontaktelementen 4 gebildet.

Die Kontaktstellen 4c sind jeweils gleichmässig über einen kreisförmigen (oder sechseckigen) Bereich 40 der Oberfläche der elekrochemisch aktiven Platte 1 angeordnet, wobei die Kathodenschicht 1c vollständig durch solche Bereiche 40 abgedeckt ist. An den Übergangsstellen zwischen Elektrodenschicht und Kontaktelementen, also den Kontaktstellen 4c, findet keine elektrochemische Reaktion statt. Daher sollen diese Übergangsstellen höchstens zehn, vorzugsweise weniger als ein Prozent der Elektrodenoberfläche beanspruchen.

Wie in Fig.3 dargestellt ist, kann die Elektronenleitstruktur der Anodenschicht 1a auch durch Drahtbündel 7 wie im Kathodenraum 3 hergestellt werden. Diese Drahtbündel 7 können an den Erhebungen des benachbarten Wärmetauscherkörpers 30′ angelötet werden. Durch diese Verbindung erfolgt gleichzeitig die Serieschaltung mit dem benachbarten Modul. Anders als im ersten Ausführungsbeispiel ergibt sich nun die elektrische Verbindung über eine Vielzahl von Stellen, die regelmässig über den gesamten Elektrodenbereich verteilt sind, was einen optimaleren Elektronentransport dank gleichmässigeren Stromdichten mit sich bringt.

Die Kontaktelemente 4 sind dünne Drähte, die auf verschiedene Wärmedehnungen der Elekrolytschicht 1b und des Wärmetauscherkörpers 30 flexibel reagieren. Da die Elekrolytschicht 1b auch durch den Dichtungsring 13, der beispielsweise aus einem Keramikfilz besteht, nachgiebig gefasst wird, kann eine schädigende Wirkung von Wärmespannungen auf die elekrochemisch aktive Platte ausgeschlossen werden.

Hinsichtlich Fig.1 kann bezüglich Fig.3 noch folgende, für die Erfindung nicht relevante Anmerkung gemacht werden: An der äusseren Peripherie kommunizieren der Anodenraum 2 und der Kathodenraum 3. Dort findet eine Durchmischung von verbrauchtem Gas und verbrauchter Luft statt. Auf der Aussenfläche der perforierten Wand 35 kann die Nachverbrennung stattfinden.

Die Montage der Brennstoffzellenbatterie durch Aufeinanderstapeln der Module wird erleichtert, wenn die Elektronenleitstruktur 8 auf der Anodenseite beispielsweise gemäss Fig.6 hergestellt wird: Ein Metallvliess 8a, das für das Gas durchlässig ist, wird auf der Anode der elekrochemisch aktiven Platte befestigt (beispielsweise durch Löten oder Sintern). Eine Vielzahl von aus dem Metallvliess 8a ausgestanzten und regelmässig angeordneten Zungen 8b dient dazu, die elektrische Verbindung mit dem benachbarten Modul herzustellen. Diese Verbindung, die sich an den Kontaktstellen zwischen Zungenspitzen und Platte 30a ergibt, kann beispielsweise durch Sintern mechanisch stabil gemacht werden.

In Fig.7 ist ein weiteres Ausführungsbeispiel dargestellt, bei dem beidseitig der elekrochemisch aktiven Platte 1 Stütz- und Elektronenleitstrukuren angeordnet sind, die durch Drahtverbindungen 4 und Bleche 30a beziehungsweise 30b gebildet werden. Diese Bleche 30a und 30b sind die Seitenflächen eines Moduls und bilden in der zusammengebauten Brennstoffzellenbatterie die beiden Platten des Wärmetauscherkörpers 30. Bei einem solchen Modul ist die elekrochemisch aktive Platte wie in einer Dose gegen schädigende Einwirkungen abgeschirmt.

Bei den oben beschriebenen Ausführungsbeispielen bestehen die Stütz- und Elektronenleitstrukturen aus Metall. Diese Strukturen können aber - zumindest teilweiseauch aus elektrisch leitender Keramik bestehen, wie es in Fig.8 angedeutet ist: Keramikkörper 9 mit parallelen Nuten 9a, rippenförmigen Kontaktelementen 9b und Kontaktflächen 9c, die auf der elekrochemisch aktiven Platte beispielsweise aufgesintert sind. Diese Keramikkörper 9 stellen einerseits eine mechanische Verstärkung dar; andererseits kann über sie der Elektronentransport stattfinden.

## Patentansprüche

1. Modul zu einer brennstoffzellenbatterie mit einer elektrochemisch aktiven Platte (1), die einerseits aus einem schichtförmigen oxidionenleitenden Feststoffelektrolyten (1b) und andererseits aus zwei beidseitig auf der Elektrolytschicht aufgebrachten Elektrodenschichten (1a, 1c) besteht, dadurch gekennzeichnet, dass mindestens die eine der Elektrodenschichten (1c) über eine Vielzahl regelmässig angeordneter Kontaktelemente (4) mit einer Stütz- und Elektronenleitstruktur (5; 30) elektrisch leitend und unlösbar verbunden ist.

2. Modul nach Anspruch 1, dadurch gekennzeichnet, dass die übergangsstellen (4c) zwischen Elektrodenschicht (1c) und Kontaktelementen (4) gelötet sind.

3. Modul nach Anspruch 1 oder 2, dadurch gekennzeichnet, dass die Übergangsstellen (4c) zwischen Elektrodenschicht (1c) und Kontaktelementen (4) höchstens zehn, vorzugsweise weniger als ein Prozent der Elektrodenoberfläche beanspruchen.

4. Modul nach einem der Ansprüche 1 bis 3, dadurch gekennzeichnet, dass die Stützstruktur (5) gitterartig ist.

5. Modul nach einem der Ansprüche 1 bis 4, dadurch gekennzeichnet, dass die Stützstruktur (30) aus mindestens einem blech besteht.

6. Modul nach einem der Ansprüche 1 bis 5, dadurch gekennzeichnet, dass die Kontaktelemente (4) drahtförmig sind.

7. Modul nach Anspruch 6, dadurch gekennzeichnet, dass die Kontaktelemente (4) in Gruppen durch jeweils ein stützstrukturseitiges bündel (6) zusammengefasst sind.

8. Modul nach den Ansprüchen 5 und 7, dadurch gekennzeichnet, dass die Stützstruktur (30) bohrungen aufweist, in welche die bündel (6) der Kontaktelementegruppen einlötbar sind.

9.  Modul nach Anspruch 5 oder 8, dadurch gekennzeichnet, dass die kathodenseitig angeordnete Stützstruktur als Wärmetauscher (30) für die dem Modul zugeführte Luft (A) ausgebildet ist.

10. Modul nach Anspruch 9, dadurch gekennzeichnet, dass die Anode (1a) mit einer elektrisch leitenden, aus einem nachgiebigen Metallvliess (8) bestehenden Struktur verbunden ist, mit welcher der elektrische Kontakt zu einem benachbarten Modul hergestellt werden kann.

11. Modul nach Anspruch 1, dadurch gekennzeichnet, dass die Stütz- und Elektronenleitstruktur (9) aus einer elektrisch leitenden Keramik besteht.

12. Brennstoffzellenbatterie mit Modulen nach einem der Ansprüche 1 bis 11, dadurch gekennzeichnet, dass die Module elektrisch in Serie geschalten sind.

13. Brennstoffzellenbatterie nach Anspruch 12, dadurch gekennzeichnet, dass jeweils beide Elektrodenschichten (1a, 1c) mit Stütz- und Elektronenleitstrukturen versehen (5) sind und dass die elektrische Verbindung benachbarter Module jeweils über eine aus zwei Teilen bestehenden Leitung zwischen den Stützstrukturen erfolgt, wobei diese Leitung durch den Gaszuführungskanal der brennstoffzellenbatterie führt und dort eine Kontaktstelle der beiden Teile aufweist.

14. Brennstoffzellenbatterie nach Anspruch 12, dadurch gekennzeichnet, dass der elektrische Kontakt zwischen benachbarten Modulen über eine Vielzahl von Punkten, die im ganzen Elektrodenbereich über die Oberfläche der Stützstrukturen verteilt sind, erfolgt.

Fig.1

Fig.2

Fig.3

Fig.4

Fig.5

Fig.6

Fig.7

Fig.8

EP 0 490 808 A1

<table>
<tr><td></td><td>Europäisches<br>Patentamt</td><td>EUROPÄISCHER RECHERCHENBERICHT</td><td>Nummer der Anmeldung</td></tr>
</table>

EP 91 81 0872
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 378 812 (ASEA BROWN & BOVERI)<br><br>* Ansprüche 1,3,4,10; Abbildungen 1,9 *<br>--- | 1,5,11,12 | H01M8/02<br>H01M8/24 |
| X | FR-A-2 306 540 (BROWN & BOVERI)<br>* Ansprüche 1-3; Abbildung 3 *<br>--- | 1,11,12 | |
| X | PATENT ABSTRACTS OF JAPAN<br>vol. 14, no. 156 (E-908)26. März 1990<br>& JP-A-02 015 564 ( NKK CORP. ) 19. Januar 1990<br>* Zusammenfassung *<br>--- | 1,10,12 | |
| X | PATENT ABSTRACTS OF JAPAN<br>vol. 14, no. 502 (E-997)2. November 1990<br>& JP-A-02 207 456 ( MITSUBISHI HEAVY IND. ) 17. August 1990<br>* Zusammenfassung *<br>--- | 1,11,12 | |
| A | DE-A-3 918 115 (SIEMENS)<br>* Spalte 5, Zeile 50 - Zeile 56; Anspruch 1; Abbildung 2 *<br>--- | 1,5,12 | RECHERCHIERTE SACHGEBIETE (Int. Cl.5) |
| A | PATENT ABSTRACTS OF JAPAN<br>vol. 14, no. 117 (E-898)(4060) 5. März 1990<br>& JP-A-01 313 855 ( NKK CORP. ) 19. Dezember 1989<br>* Zusammenfassung *<br>--- | 1,10,12 | H01M |
| A | PATENT ABSTRACTS OF JAPAN<br>vol. 14, no. 292 (E-944)25. Juni 1990<br>& JP-A-02 094 365 ( TONEN CORP. ) 5. April 1990<br>* Zusammenfassung *<br>--- | 1,5,12 | |
| A | PATENT ABSTRACTS OF JAPAN<br>vol. 14, no. 292 (E-944)(4235) 25. Juni 1990<br>& JP-A-02 094 366 ( TONEN CORP. ) 5. April 1990<br>* Zusammenfassung *<br>---<br>-/-- | 1,5,12 | |

Der vorliegende Recherchenbericht wurde für alle Patentansprüche erstellt

| Recherchenort | Abschlußdatum der Recherche | Prüfer |
|---|---|---|
| DEN HAAG | 07 FEBRUAR 1992 | D'HONOT J.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P0403)

10

EP 0 490 808 A1

**Europäisches Patentamt**

# EUROPÄISCHER RECHERCHENBERICHT

Nummer der Anmeldung

EP   91 81 0872
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X | EP-A-0 437 175 (GEBRÜDER SULZER)<br><br>* Spalte 4, Zeile 22 - Zeile 46 *<br>* Spalte 6, Zeile 12 - Zeile 44 *<br>* Spalte 4, Zeile 16 - Zeile 28; Ansprüche 1,2,4,12; Abbildungen 1,2A,2B,4 *<br>--- | 1,4,6,9, 12-14 | |
| P,X | EP-A-0 410 159 (ASEA BROWN & BOVERI)<br><br>* Seite 4, Zeile 11 - Zeile 42 *<br>* Seite 5, Zeile 28 - Zeile 43 *<br>* Anspruch 1; Abbildungen 1,4,7,18 *<br>--- | 1,2,4,7, 8,12,14 | |
| P,X | DE-A-4 016 157 (ASEA BROWN & BOVERI)<br><br>* Spalte 3, Zeile 13 - Spalte 4, Zeile 12; Ansprüche 1,3-5,17; Abbildungen 1,2 *<br>--- | 1,4-6, 10-12 | |
| P,X | EP-A-0 419 163 (NGK INSULATORS)<br>* Spalte 11, Zeile 54 - Spalte 12, Zeile 8 *<br>* Spalte 8, Zeile 22 - Zeile 40 *<br>* Spalte 10, Zeile 38 - Zeile 50; Anspruch 1; Abbildungen 7,8 *<br>--- | 1,5,6,12 | **RECHERCHIERTE SACHGEBIETE (Int. Cl.5)** |
| P,X | EP-A-0 432 381 (ASEA BROWN & BOVERI)<br>* Seite 5, Zeile 2 - Zeile 22; Ansprüche 3,4; Abbildungen 3,4 *<br>----- | 1,4-6,10 | |

Der vorliegende Recherchenbericht wurde für alle Patentansprüche erstellt

| Recherchenort | Abschlußdatum der Recherche | Prüfer |
|---|---|---|
| DEN HAAG | 07 FEBRUAR 1992 | D'HONDT J.W. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)